# EUROPÄISCHE PATENTSCHRIFT

(11) **EP 2 429 061 B1**
(45) Veröffentlichungstag und Bekanntmachung des Hinweises auf die Patenterteilung: **26.03.2014**
(21) Anmeldenummer: 11180460.5
(22) Anmeldetag: 07.09.2011
(51) Int. Cl.: H02J 13/00, G06Q 50/00

(54) **Verfahren zur verbesserten Verlustenergieprognose in einem Übertragungsnetz**
Method for improved energy loss forecasting in a transfer network
Procédé de pronostic de perte d'énergie amélioré dans un réseau de transmission

(30) Priorität: 08.09.2010 DE 102010044724
(43) Veröffentlichungstag der Anmeldung: 14.03.2012
(73) Patentinhaber: EnBW Energie Baden-Württemberg AG, 76131 Karlsruhe (DE)
(72) Erfinder: Semmig, Andreas, 73732 Esslingen (DE); Graeber, Dietmar, 70597 Stuttgart (DE); Bothor, Sebastian, 70180 Stuttgart (DE)
(74) Vertreter: DREISS Patentanwälte PartG mbB

(56) Entgegenhaltungen:
- EP-A1- 1 381 132
- CN-A- 101 860 025

## Beschreibung

Im liberalisierten deutschen Elektrizitätsmarkt sind die Betreiber von Übertragungsnetzen dazu verpflichtet Energie, die sie zur Deckung von elektrischen Verlusten benötigen, nach transparenten, nicht diskriminierenden und marktorientierten Verfahren zu beschaffen. Bei der Ausgestaltung dieser Verfahren ist dem Ziel einer möglichst preisgünstigen Energieversorgung besonderes Gewicht beizumessen.

So stehen die deutschen Übertragungsnetzbetreiber täglich vor der Herausforderung, die Energie zur Deckung der in ihrer Regelzone anfallenden elektrischen Verluste im Voraus kostenminimal zu erwerben. Die besondere Schwierigkeit bei der hierfür zu erstellenden Kurzfrist- bzw. Vortagesprognose besteht darin, dass die Verlustenergie von einer Vielzahl systemtechnischer und energiewirtschaftlicher Größen und nicht, wie zum Beispiel in Verteilnetzen, hauptsächlich von der vertikalen Netzlast abhängt.

Es ist bekannt, solche Prognosen aufbauend auf einer statistischen Analyse mit zum Beispiel dem klassischen ARMA-Ansatz zu erstellen. Einen Überblick über die Methodik dieser Prognosen findet sich in dem Artikel "Kurzfristprognosen der Verlustenergie in Übertragungsnetzen" von Dipl.-Ing. S. Bothor, Institut für Energiewirtschaft und Rationelle Energieanwendung (IER) - Universität Stuttgart, erschienen in VDI-Berichte 2080: 8. Fachtagung Optimierung in der Energiewirtschaft, S. 105-119, Herausgeber: VDE Wissensforum GmbH, VDI Verlag GmbH, Düsseldorf 2009, (ISBN: 978-3-18-092080-1) In diesem Artikel wird untersucht, ob die Realisierung kleinerer Prognosehorizonte Kosteneinsparungen zur Folge hätte, welche die Mehrkosten für die Bereitstellung aktuellerer Verlustenergiedaten ausgleichen könnten.

Unter einem Übertragungsnetz wird in der vorliegenden Anmeldung ein Stromnetz zur Übertragung von Elektrizität verstanden. Ein solches Übertragungsnetz wird, von einem rechtlichen und wirtschaftlichen Standpunkt aus betrachtet, von einem Übertragungsnetzbetreiber betrieben. Technisch betrachtet weist ein solches Übertragungsnetz in der Regel mehrere Spannungsebenen auf, auf denen Strom mit je nach Ebene unterschiedlich hohen Spannungen übertragen wird. Bei dem Strom handelt es sich um Drehstrom, also um einen 3- phasigen Wechselstrom. Dies gilt für sämtliche Spannungsebenen. Aus diesem Grund kann das Übertragungsnetz auch als Drehstromnetz bezeichnet werden. Die Spannungsebenen mit der höchsten Spannung werden mit Nennspannungen von 380 kV (bzw. auch als 400 kV bekannt) und/oder 220 kV betrieben. Zur Übertragung von Energie zwischen den mit diesen Spannungen betriebenen Spannungsebenen auf der einen Seite und einer als Hochspannungsebene bezeichneten Spannungsebene, die mit einer Nennspannung 110 kV betrieben wird, auf der anderen Seite, werden Transformatoren verwendet.

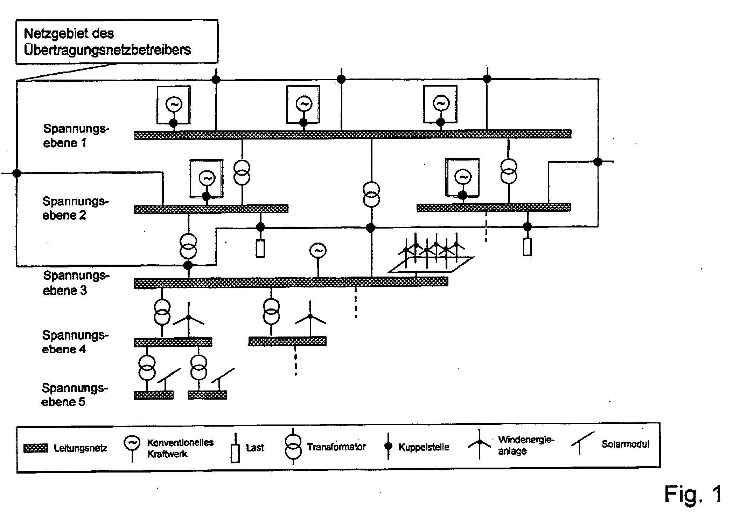

In der Figur 1 ist stark vereinfacht ein Übertragungsnetz 1 schematisch dargestellt. Dieses Übertragungsnetz 1 umfasst in dem dargestellten Beispiel fünf Spannungsebenen. Im dargestellten Beispiel umfasst das Netzgebiet des Übertragungsnetzbetreibers (ÜNB) die Spannungsebenen 1 und 2. Das Übertragungsnetz 1 ist beispielsweise über Transformatoren mit darunter liegenden Spannungsebenen, hier den Spannungsebenen 3, 4 und 5, sowie Kraftwerken verbunden. Die Ränder des Netzgebiets des Übertragungsnetzbetreibers (ÜNB) sind in Figur 1 durch geschlossene Linienzüge angedeutet. Dort wo eine Leitung den Rand des Netzgebiets überquert ist ein Zähler installiert, der die zur Erstellung einer Randbilanz erforderlichen Daten ermittelt und bereitstellt. Diese Zählerstellen sind in Figur durch Punkte an den Rändern des Netzgebiets angedeutet.

Die Spannungsebenen 3, 4 und 5 stellen in der Regel Senken dar, da sie die elektrischen Verbraucher eines Versorgungsgebiets mit elektrischer Energie versorgen.

An den Spannungsebenen 3, 4 und 5 können beispielsweise Windenergieparks, einzelne Windenergieanlagen, Photovoltaikanlagen, aber auch Wasserkraftanlagen und andere dezentrale Erzeugungseinrichtungen angeschlossen sein. Die Leistung dieser Erzeugungseinrichtungen ist in aller Regel kleiner als die in der betreffenden Spannungsebene nachgefragte Leistung.

In dem von dem Übertragungsnetz 1 abgedeckten Gebiet befinden sich mehrere Großkraftwerke. Die von den konventionellen Kraftwerken oder Großkraftwerken erzeugte elektrische Energie wird in das Übertragungsnetz 1 eingespeist, so dass die Großkraftwerke bezüglich des Übertragungsnetzes 1 Quellen darstellen.

Das in Figur 1 dargestellte Übertragungsnetz 1 ist elektrisch mit den darunter liegenden Spannungsebenen 3 bis 5 verbunden, weist aber auch Verbindungen zu benachbarten, nicht dargestellten Übertragungsnetzen auf. An allen Verbindungsstellen zwischen benachbarten Übertragungsnetzen, aber auch zu darunter liegenden Spannungsebenen und den Großkraftwerken sind Zähler für die elektrische Leistung beziehungsweise die übertragene elektrische Energie installiert, die fortlaufend den Energiefluss erfassen.

Wenn man nun zu einem bestimmten Zeitpunkt die Energieflüsse an allen Schnittstellen des Übertragungsnetzes erfasst und eine sogenannte Randbilanz des Übertragungsnetzes erstellt, dann lassen sich die in dem Übertragungsnetz zu diesem Zeitpunkt vorhandenen Netzverluste durch eine Randbilanz, welche aus der Summe aller in das Übertragungsnetz 1 eingespeisten Leistungen abzüglich der Summe aller aus dem Übertragungsnetz 1 entnommenen elektrischen Leistungen besteht, erfassen. Diese Randbilanz ist sehr genau, da sie auf der Basis tatsächlicher elektrischer Leistungen erstellt wird und alle Leistungsströme erfasst.

Nachteilig ist jedoch, dass diese Randbilanz nicht in Echtzeit erstellt werden kann. In der Praxis dauert es beispielsweise 72 Stunden, bis alle Zählerdaten verfügbar sind und dann für einen 72 Stunden in der Vergangenheit liegenden Zeitpunkt eine exakte Randbilanz erstellt werden kann.

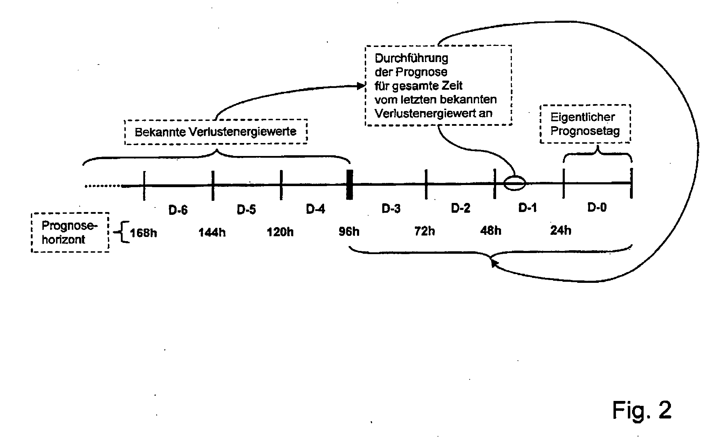

In Figur 2 ist ein Zeitstrahl dargestellt, bei dem der aktuelle Tag als d-1 bezeichnet ist. Der Tag d-1 ist gewissermaßen die Gegenwart in diesem Zeitstrahl, links davon liegt die Vergangenheit und rechts davon die Zukunft (in Figur 2 als d-0 bezeichnet).

Ausgehend von dem Tag d-1 um 72 Stunden zurückgerechnet ist zwischen den Tagen d-3 und d-4 ein Zeitpunkt, der mit 96h bezeichnet ist, dargestellt.

Der Zeitpunkt 96h bezeichnet in dem dargestellten Beispiel den Zeitpunkt an, von dem die aktuellsten Verlustenergiewerte auf der Basis einer Randbilanz verfügbar sind.

Für alle Zeitpunkte, die weiter als der Zeitpunkt 96h in der Vergangenheit liegen, sind die Verlustenergiewerte ohnehin vorhanden. Für den Zeitraum zwischen 96h und d-1 sind keine Verlustenergiewerte bekannt.

Wenn man also an dem Tag d-1 eine Prognose für den nächsten Tag, der als d-0 in Figur 2 bezeichnet wird, erstellen will, muss man ausgehend von dem aktuellsten verfügbaren Wert für die Verlustenergie zum Zeitpunkt 96h eine Prognose über 96 Stunden erstellen, wobei die Tage d-3, d-2 und d-1 bereits in der Vergangenheit beziehungsweise in der Gegenwart liegen und der eigentliche Prognosetag d-0 als einziger in der Zukunft liegt.

Es ist also aufgrund des zeitlichen Verzugs zwischen dem Zeitpunkt der Durchführung der Prognose (d-1) und dem aktuellsten verfügbaren Verlustenergiewert (zum Zeitpunkt 96h) erforderlich, eine Prognose über einen Zeitraum über 96 Stunden durchzuführen, wobei lediglich die letzten 24 Stunden (siehe d-0) eine echte Prognose darstellen, da die Tage d-3 bis d-1 ausgehend von dem Zeitpunkt zu dem die Prognose erstellt wird, in der Vergangenheit oder in der Gegenwart liegen.

Es versteht sich von selbst, dass es mit einem größeren technischen Aufwand möglich wäre, die Zeitdifferenz zwischen der Durchführung der Prognose am Tag d-1 und dem aktuellsten bekannten Verlustenergiewert zu verkürzen und dadurch den Prognosezeitraum zu verkürzen. Infolgedessen verbessert sich auch die Prognosegüte für den eigentlichen Prognosetag d-0.

Selbstverständlich muss auch nicht immer ein vollständiger Tag mit 24 Stunden prognostiziert werden. Es ist auch möglich, anstelle eines Prognosetags d-0 nur wenige in der Zukunft liegende Stunden, wie zum Beispiel 2 Stunden, 4 Stunden oder 8 Stunden zu prognostizieren.

Unabhängig davon beeinflussen Änderungen des Prognosezeitraums und des in der Zukunft liegenden Prognoseintervalls die Güte der Prognose. Allerdings steigen auch die Kosten für die aktuellere Bereitstellung von Verlustenergiewerten an, so dass man häufig einen Kompromiss in Kauf nimmt, zwischen Prognosegüte einerseits und den Kosten für die Bereitstellung von in der Vergangenheit ermittelten Verlustenergiewerten.

Der Erfindung liegt die Aufgabe zugrunde, ein Verfahren bereitzustellen, das einerseits eine verbesserte Prognosegüte ermöglicht, ohne dabei die Kosten für die Bereitstellung von Verlustenergiewerten signifikant zu erhöhen.

Diese Aufgabe wird erfindungsgemäß bei einem Verfahren zur Prognose der Verlustenergie in einem Übertragungsnetz, wobei sich die Prognose auf Verlustenergiedaten der Vergangenheit stützt, durch die Merkmale des Anspruchs 1 gelöst.

### Vorteile der Erfindung

Dadurch, dass die Prognose unter Berücksichtigung gemessener physikalischer Größen erfolgt, die aktueller sind als die Verlustenergiedaten der Vergangenheit, kann die Prognosegüte signifikant erhöht werden, ohne dass der Aufwand für die Erhebung dieser Daten stark ansteigt.

Es ist erfindungsgemäß nämlich möglich, anhand der aktuellen elektrischen Leistungen in einzelnen Leitungsabschnitten des Übertragungsnetzes oder in anderen Betriebsmitteln die Prognosegüte signifikant zu verbessern.

Im Idealfall wird eine physikalische Größe in Echtzeit erfasst und deren aktueller Wert bei der Prognose der Verlustenergie eingesetzt.

In einer bevorzugten Ausgestaltung werden als physikalische Größen die Werte der Wirklast an den Knotenpunkten des Übertragungsnetzes gemessen. Im Unterschied zu der Erfassung der Messwerte für die Randbilanz erfolgt die Messung der physikalischen Größe nicht über einen Zeitraum, sondern punktuell zu einem Zeitpunkt. Dieser Zeitpunkt liegt zum Beispiel am Ende eines vorbestimmten Zeitraums, wobei als vorbestimmter Zeitraum bevorzugt eine Viertelstunde verwendet wird. Auch die in Verbindung mit der Erstellung der Randbilanz ermittelten Verlustenergie-Daten werden für einen solchen Zeitraum, also für eine Viertelstunde, ermittelt.

Mit Hilfe der als physikalische Größen gemessenen Knoten-Wirklasten werden mittels eines Computerprogramms zur Berechnung von Lastflüssen die Lastflüsse jeweils am Anfang und am Ende einer Leitung bzw. eines Transformators berechnet. Die Differenzen aus Wirklast am Anfang und Wirklast am Ende einer Leitung bzw. eines Transformators ergeben die Verlustenergie, die durch das jeweilige Betriebsmittel verursacht wird.

Dabei nutzt das erfindungsgemäße Verfahren den Effekt aus, dass bei Prognosen in Übertragungsnetzen der Einfluss des unmittelbar vor dem Prognosezeitraum liegenden Zeitabschnitts eine besondere Bedeutung hat. Zum anderen nutzt das erfindungsgemäße Verfahren den Umstand aus, dass in Übertragungsnetzen eine Vielzahl von physikalischen Größen in Echtzeit gemessen werden. Diese Messwerte werden in dem Bestreben erfasst, einen Datensatz zu erhalten, der den Zustand des Elektrizitätsnetzes so gut wie möglich beschreibt. Daher werden so viele Daten wie möglich gesammelt, darunter auch viele Daten von Betriebsmitteln, die nicht in der Verlustenergiebilanz der TNG enthalten sind und für deren Energieverluste die TNG demnach auch nicht aufkommen muss.

Erfindungsgemäß ist nun vorgesehen, aus dieser Vielzahl an Messdaten die relevanten auszuwählen - das sind die Daten aller TNG-Betriebsmittel - und daraus die interessierenden Hilfsdaten für die Prognose zu generieren.

In weiterer vorteilhafter Ausgestaltung des erfindungsgemäßen Verfahrens erfolgt die Messung der mindestens einen physikalischen Größe vor der Erstellung der Prognose, um dadurch fehlende Zählerwerte durch Werte aus Messgeräten zu ersetzen.

Da es möglich ist, die Ausgangssignale eines Messgeräts in Echtzeit zu erstellen und auszuwerten, ist es möglich, unmittelbar vor der Erstellung der Prognose mindestens eine physikalische Größe zu erfassen und bei der Prognoseerstellung zu verwenden.

Im Zusammenhang mit der beanspruchten Erfindung werden als Messgeräte, diejenigen Messeinrichtungen bezeichnet, die an den verschiedenen innerhalb eines Bilanzgebietes befindlichen Betriebsmitteln (Kraftwerk, Leitung, Transformator) angeordnet sind und dort die relevanten physikalischen Größen (Spannung, Strom, elektrische Leistung) messen.

Als Zähler werden diejenigen Messeinrichtungen bezeichnet, die an den Leitungen, welche die Grenzen eines Bilanzgebietes überschreiten, angeordnet sind und dort den Leistungsfluss messen.

Die Messung aktueller physikalischer Größen erfolgt bevorzugt an einem Betriebsmittel des Übertragungsnetzes, wie zum Beispiel an einem Zweig des Leitungsnetzes und/oder an mindestens einem Transformator des Übertragungsnetzes. Dabei ist es möglich, dass der Transformator zwischen zwei Spannungsebenen innerhalb des Übertragungsnetzes angeordnet ist. Zudem werden auch Transformatoren gemessen werden, die aus dem Übertragungsnetz heraus- oder hereinführen.

Für die Betriebsmittel, an denen keine Messeinrichtungen vorhanden sind, oder diese nicht in Betrieb oder ausgefallen sind, werden Werte automatisch geschätzt.

Um das erfindungsgemäße Verfahren mit einer bestmöglichen Prognosegüte durchführen zu können, ist weiter vorgesehen, dass die in der Vergangenheit gemessenen physikalischen Größen an mindestens einem Betriebsmittel und die für den gleichen in der Vergangenheit liegenden Zeitpunkt bestimmten Verlustenergiedaten des Übertragungsnetzes bei der Prognose auf der Basis aktuell gemessener physikalischer Größen verwendet werden.

Dies bedeutet, dass man eine Korrelation zwischen den gemessenen physikalischen Größen an einem oder mehreren Betriebsmitteln des Übertragungsnetzes und der zu diesem Zeitpunkt im Übertragungsnetz auftretende Energieverluste berechnet. Diese Korrelation kann, weil die Verlustenergiedaten nur für die Vergangenheit bekannt sind, selbstverständlich erst für in der Vergangenheit liegende Zeitpunkte und Betriebszustände ermittelt werden.

Wenn man diese Korrelationen einmal ermittelt hat, dann ist es erfindungsgemäß wiederum möglich, aus den aktuell gemessenen physikalischen Größen des mindestens einen Betriebsmittels des Übertragungsnetzes auf die dann zu diesem gegenwärtigen Zeitpunkt im Übertragungsnetz anfallenden aktuellen Energieverluste zu schließen und diese entsprechend in der Prognose zu berücksichtigen. Dadurch wird die für die Vergangenheit ermittelte Korrelation zwischen einzelnen physikalischen Größen, wie zum Beispiel der momentanen Leistung eines Transformators und den Netzverlusten ausgenutzt, um aus der singulären Messung eines Betriebsmittels Rückschlüsse auf die momentanen Energieverluste im Übertragungsnetz zu schließen.

Die Prognose erfolgt erfindungsgemäß mittels erweiterter ökonometrischer Modelle. Das ökonometrische Modell ist zentraler Bestandteil des Box-Jenkins-Verfahrens. Dieses beinhaltet Entwicklung, Schätzung der Koeffizienten, Ausführung der Prognoserechnung, Validierung und Bewertung des Prognosemodells in dieser Reihenfolge.

Somit werden die Schätzung des ökonometrischen Modells und die anschließende Prognoserechnung innerhalb des Box-Jenkins-Verfahrens tagtäglich ausgeführt.

Welche Modellparameter berücksichtigt werden, welche Modellklasse bzw. Modellordnungen verwendet werden, wie gut das verwendete Modell die Prognosegröße und deren Abhängigkeiten abbilden kann und welche Prognosegüte erreicht wird, wird in den restlichen Teilen des Box-Jenkins-Verfahrens festgelegt bzw. ermittelt, die nicht zwingend tagtäglich durchgeführt werden müssen.

Ein Saisonales Autoregressive Moving-Average (SARMAX)-Modell ist ein erweitertes Autoregressive Moving-Average (ARMA)-Modell. Beide Modellarten gehören zu den ökonometrischen Modellen.

Das erfindungsgemäße Verfahren ist besonders geeignet, wenn der Prognosehorizont größer als zwei Stunden und kleiner als 168 Stunden ist.

In theoretisch sinnvoller Weise ist das Verfahren allerdings auch bis zu einem Prognosehorizont 288 Stunden möglich. Figur 2 stellt lediglich einen Beispielfall dar. Durch die Ersetzung der fehlenden Werte aus der Zähler-Randbilanz durch die weitere aktuellere Ermittlung der Verluste aus Messwerten sollte der Prognosehorizont erfindungsgemäß 48 Stunden in aller Regel nicht übersteigen.

Weitere Vorteile und vorteilhafte Ausgestaltungen der Erfindung sind der nachfolgenden Zeichnung, deren Beschreibung und den Patentansprüchen entnehmbar.

Es zeigen:
- Figur 1: ein Übertragungsnetz mit zwei Spannungsebenen in stark schematisierter und vereinfachter Form;
- Figur 2: einen Zeitstrahl zur Erläuterung der Begriffe Verlustenergiewerte und Prognosezeitraum,
- Figur 3: die erfindungsgemäße Messung aktueller physikalischer Größen an verschiedenen Betriebsmitteln in dem Übertragungsnetz gemäß Figur 1, und
- Figur 4: die erfindungsgemäße Zusammenführung von aktuellen Messwerten an Betriebsmitteln des Übertragungsnetzes und der für die Vergangenheit bekannten Zählerwerte zur Erstellung einer Randbilanz für das Übertragungsnetz.

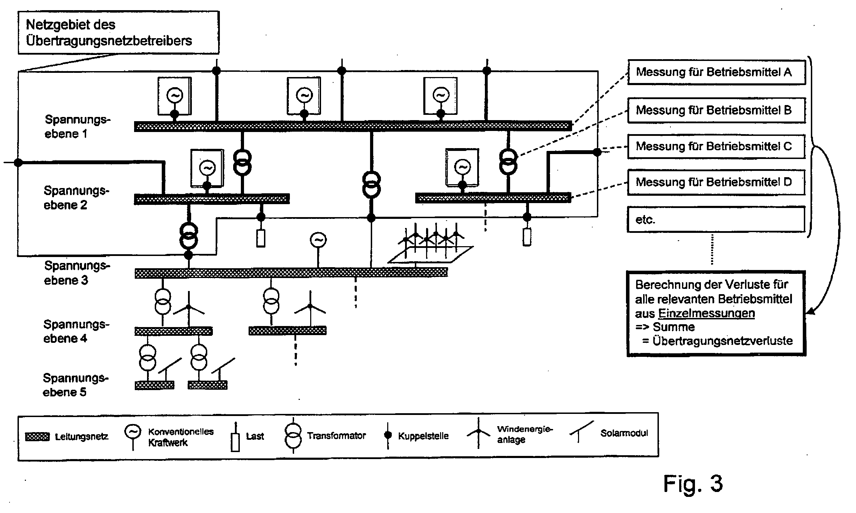

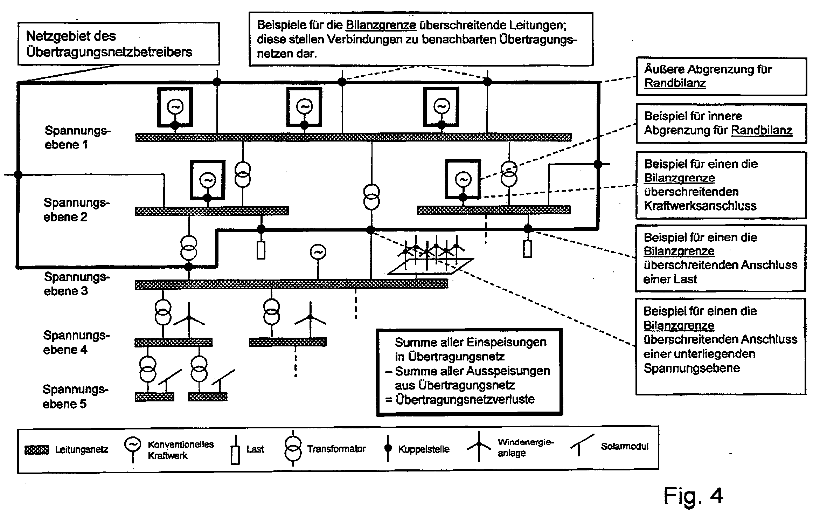

Die Figuren 1 und 2 wurden bereits anhand der Beschreibungseinleitung und zur Erläuterung des Standes der Technik bei Verfahren zur Verlustenergieprognose erläutert. In den Figuren 3 und 4 werden die gleichen Bezugszeichen zugrundegelegt.

Die Figuren 1 und 3 stellen das gleiche Übertragungsnetz dar. Während bei der Figur 1 der Fokus auf den Rändern des Übertragungsnetzes liegt, ist der Fokus in der Figur 3 auf das Innere des Übertragungsnetzes gerichtet. In Figur 3 sind verschiedene Betriebsmittel, wie beispielsweise verschiedene Zweige A, C, D der Spannungsebenen 1 oder 2, und Betriebsmittel, wie zum Beispiel ein Transformatoren B, dargestellt.

Erfindungsgemäß ist nun vorgesehen, dass für mindestens ein Betriebsmittel A, B, C und D des Übertragungsnetzes 1 eine Messung in Echtzeit erfolgt und die Ergebnisse dieser mindestens einen Messung bei der Prognose der Verlustenergie für die Zukunft berücksichtigt wird. Bevorzugt wird jedoch, dass für alle im Netzgebiet und im Besitz des ÜNB befindlichen Betriebsmittel Messungen durchgeführt werden und die Ergebnisse dieser Messungen zu einem aktuellen Wert der im Netzgebiet benötigten Verlustenergie zusammengefasst wird. Diese Werte werden kontinuierlich oder in regelmäßigen Zeitabständen erhoben und abgespeichert.

So kann beispielsweise die in der Spannungsebene 1 fließende elektrische Leistung erfasst und bei der Prognose eingesetzt werden. Dieser Sachverhalt ist in der Figur 3 durch den Block "Messung für Betriebsmittel A" angedeutet.

Die Leistung eines Transformators, der die Spannungsebene 1 mit einem Netz der Spannungsebene 2 verbindet, kann ebenfalls erfindungsgemäß erfasst und ausgewertet werden. Dies ist durch den Block "Messung für Betriebsmittel B" angedeutet.

Entsprechendes gilt auch für die Leistungsmessung in verschiedenen Zweigen der Spannungsebene 2 (siehe Messung für Betriebsmittel C und D). aus der Summe aller Einzelmessungen an den Betriebsmitteln A bis C können die aktuellen Netzverluste über die oben genannte Korrelation zwischen Messwert und Energieverlust ermittelt werden. Damit sind die aktuellen Netzverluste zumindest näherungsweise bekannt und können bei der Verlustenergieprognose berücksichtigt werden. Dadurch verbessert sich die Güte der Prognose signifikant, bei gleichzeitig geringen Kosten für die zusätzlichen Messungen.

Bei dem erfindungsgemäßen Verfahren ist es notwendig, für alle Betriebsmittel für deren Wirkleistungsverluste die TNG aufkommen muss, Messungen durchzuführen, bzw. wie oben beschrieben, Messwerte automatisch zu schätzen für Orte, an denen keine Messgeräte vorhanden oder die vorhandenen Messgeräte ausgefallen sind.

Das erfindungsgemäße Verfahren ermöglicht eine deutlich verbesserte Prognosegüte wegen der Aktualität der Messung einer physikalischen Größe an mindestens einem Betriebsmittel.

Mit dem erfindungsgemäßen Verfahren ist es möglich, nicht nur die Beschaffungskosten zu minimieren, sondern auch die volkswirtschaftlichen Gesamtkosten zu verringern. Im Vordergrund einer verbesserten Verlustenergieprognose steht vor allem auch die Steigerung der Versorgungssicherheit, da die einzusetzende Ausgleichsenergie verringert wird.

Es ist daher möglich, durch eine Kombination der aus der Literatur bekannten ökonometrischen Ansätze zur Verlustenergieprognose und die erfindungsgemäße Messung mindestens einer physikalischen Größe die Prognosegüte signifikant zu verbessern und dadurch die Beschaffungskosten für die Verlustenergie zu verringern.

Dabei verknüpft das erfindungsgemäße Verfahren historische Werte aus betrieblichen Messungen mindestens einer physikalischen Größe und der damals mit Hilfe einer Randbilanz erfassten Netzenergieverluste. Mit Hilfe der dadurch gewonnenen Korrelation zwischen Messungen an einzelnen Betriebsmitteln und den Netzenergieverlusten, können die in Echtzeit ermittelten Messungen an einzelnen Betriebsmitteln als Indikator für die aktuellen Netzenergieverluste dienen.

Dadurch wird ein aktueller, wenn auch etwas ungenauerer Wert für die Netzenergieverluste ermittelt. Dieser Wert kann unmittelbar vor der Prognose ermittelt werden und bei der Prognose in der oben beschriebenen Weise eingesetzt werden.

Im Ergebnis wird dadurch mit vergleichsweise geringem technischem Aufwand eine erhebliche verbesserte Prognosegüte erreicht. Infolgedessen kann die Beschaffung der Netzenergieverluste optimiert und infolgedessen für den Betreiber der Übertragungsnetze, aber auch für dessen Kunden die Wirtschaftlichkeit sowie die Versorgungssicherheit verbessert werden.

In Figur 4 ist wird veranschaulicht, wie die abrechnungsrelevante Verluste aus den Daten der Zählgeräte ermittelt werden. Daraus wird deutlich, dass das erfindungsgemäße Verfahren zur Verlustenergieprognose einerseits auf den ökonometrischen Ansätzen zur Verlustenergieprognose auf der Basis von Randbilanzen aufsetzt (siehe Figur 1) und andererseits die erfindungsgemäße verbesserte Prognosegüte dadurch erreicht wird, dass an verschiedenen Betriebsmitteln innerhalb des Übertragungsnetzes in Echtzeit Messungen physikalischer Größen durchgeführt werden und dadurch eine aktuelle anfallende Verlustenergie im Übertragungsnetz zumindest näherungsweise ermittelt werden kann. Dieser aktuelle Verlustenergiewert wird erfindungsgemäß bei der Prognose als Eingangsgröße herangezogen und erlaubt deshalb eine verbesserte Prognosegüte.

Die Messwerte aller in dem Bilanzgebiet vorhandenen und im Besitz des Übertragungsnetz-Betreibers befindlichen Messgeräte werden zu einer aktuellen Verlustenergieleistung zusammengefasst und in dem erfindungsgemäßen Verfahren zur Verbesserung der Prognosegüte genutzt.

## Patentansprüche

1. Verfahren zur Prognose der Verlustenergie in einem Übertragungsnetz (1), wobei sich die Prognose auf Verlustenergie-Daten der Vergangenheit stützt, **dadurch gekennzeichnet, dass** die Prognose unter Berücksichtigung gemessener physikalischer Größen erfolgt, dass die Messung physikalischer Größen zu einem Zeitpunkt erfolgt, der nach einem Zeitpunkt liegt für den die aktuellsten Verlustenergie-Daten der Vergangenheit verfügbar sind, und dass die Korrelation der in der Vergangenheit gemessenen physikalischen Größen an mindestens einem Betriebsmittel mit den für den gleichen Zeitraum ermittelten Verlustenergie-Daten der Vergangenheit berechnet wird.

2. Verfahren nach Anspruch 1, **dadurch gekennzeichnet, dass** gekennzeichnet, dass die Messung physikalischer Größen unmittelbar vor der Erstellung der Prognose erfolgt.

3. Verfahren nach Anspruch 1 oder 2, **dadurch gekennzeichnet, dass** gekennzeichnet, dass die Messung aktueller physikalischer Größen an mindestens einem Betriebsmittel des Übertragungsnetzes (1) erfolgt.

4. Verfahren nach Anspruch 3, **dadurch gekennzeichnet, dass** gekennzeichnet, dass die Messung aktueller physikalischer Größen an mindestens einem Teil des Leitungsnetzes (A, C, D), an mindestens einem Transformator (B) des Obertragungsnetzes (1) erfolgt.

5. Verfahren nach einem der vorhergehenden Ansprüche, **dadurch gekennzeichnet, dass** die für die Vergangenheit ermittelten Korrelationen zwischen gemessenen physikalischen Größen an mindestens einem Betriebsmittel und Verlustenergie-Daten bei der Verlustenergie-Prognose auf der Basis aktuell gemessener physikalischer Größen verwendet werden.

6. Verfahren nach einem der vorhergehenden Ansprüche, **dadurch gekennzeichnet, dass** die Prognose der Verlustenergie mittels ökonometrischer Modelle erfolgt.

7. Verfahren nach Anspruch 6, **dadurch gekennzeichnet, dass** die Prognose der Verlustenergie mittels erweiterter ökonometrischer Modelle, insbesondere eines ARMA-Modells und/oder eines SARMAX-Modells erfolgt.

8. Verfahren nach einem der vorhergehenden Ansprüche, **dadurch gekennzeichnet, dass** es bei einem elektrischen Übertragungsnetz oder einem Übertragungsnetz für Gas eingesetzt wird.

9. Verfahren nach einem der vorhergehenden Ansprüche, **dadurch gekennzeichnet, dass** der Prognose-Horizont größer als 2 Stunden (2h) und kleiner als 288 Stunden (288h) ist.

10. Computerprogramm, **dadurch gekennzeichnet, dass** es zur Anwendung in einem Verfahren nach einem der vorangehenden Ansprüche programmiert ist.

11. Speichermedium, **dadurch gekennzeichnet, dass** auf ihm ein Computerprogramm zur Anwendung in einem Verfahren nach den Ansprüchen 1 bis 9 abgespeichert ist.

## Claims

1. A method for forecasting the energy loss in a transmission network (1), in which the forecast is based on energy loss data from the past, **characterized in that** the forecast is made taking measured physical variables into account; that the measurement of physical variables is done at a time which is after a time at which the most-current energy loss data from the past are available; and that the correlation of the physical variables, measured in the past at at least one power grid component, with the energy loss data ascertained for the same period of time is calculated.

2. The method of claim 1, **characterized in that** the measurement of physical variables is done immediately before the forecast is made.

3. The method of claim 1 or 2, **characterized in that** the measurement of current physical variables is done at at least one power grid component of the transmission network (1).

4. The method of claim 3, **characterized in that** the measurement of current physical variables at is done at least a portion of the transmission line network (A, C, D), at at least one transformer (B) of the transmission network (1).

5. The method of one of the foregoing claims, **characterized in that** the correlations, ascertained for the past between measured physical variables at at least one power grid component and energy loss data, are used in the energy loss forecast on the basis of currently measured physical variables.

6. The method of one of the foregoing claims, **characterized in that** the forecast of the energy loss is made by means of econometric models.

7. The method of claim 6, **characterized in that** the forecast of the energy loss is made by means of expanded econometric models, in particular an ARMA model and/or a SARMAX model.

8. The method of one of the foregoing claims, **characterized in that** it is employed in an electrical transmission network or a transmission network for gas.

9. The method of one of the foregoing claims, **characterized in that** the forecast horizon is greater than 2 hours (2h) and less than 288 hours (288h).

10. A computer program, **characterized in that** it is programmed for use in a method of one of the foregoing claims.

11. A memory storage medium, **characterized in that** a computer program for use in a method of one of claims 1-9 is stored in memory in it.

## Revendications

1. Procédé de prévision de l'énergie perdue dans un réseau de transport (1), dans lequel la prévision se base sur les données d'énergie perdue du passé, **caractérisé par le fait que** la prévision se fait en considération de grandeurs physiques mesurées, que la mesure de grandeurs physiques est réalisée à un moment qui suit un moment pour lequel on dispose des données d'énergie perdue les plus actuelles du passé, et que l'on calcule la corrélation des grandeurs physiques mesurées dans le passé, sur au moins un matériel, avec les données d'énergie perdue du passé déterminées pour la même période.

2. Procédé selon la revendication 1, **caractérisé par le fait que** la mesure de grandeurs physiques se fait immédiatement avant de faire la prévision.

3. Procédé selon la revendication 1 ou 2, **caractérisé par le fait que** la mesure de grandeurs physiques actuelles se fait sur au moins un matériel du réseau de transport (1).

4. Procédé selon la revendication 3, **caractérisé par le fait que** la mesure de grandeurs physiques actuelles se fait sur au moins une partie du réseau de distribution (A, C, D), sur au moins un transformateur (B) du réseau de transport (1).

5. Procédé selon l'une quelconque des revendications précédentes, **caractérisé par le fait que** les corrélations déterminées pour le passé entre les grandeurs physiques mesurées sur au moins un matériel et les données d'énergie perdue sont utilisées dans la prévision d'énergie perdue sur la base de grandeurs physiques mesurées actuellement.

6. Procédé selon l'une quelconque des revendications précédentes, **caractérisé par le fait que** la prévision de l'énergie perdue se fait au moyen de modèles économétriques.

7. Procédé selon la revendication 6, **caractérisé par le fait que** la prévision de l'énergie perdue se fait au moyen de modèles économétriques élargis, en particulier d'un modèle ARMA et/ou d'un modèle SARMAX.

8. Procédé selon l'une quelconque des revendications précédentes, **caractérisé par le fait qu'**il est mis en oeuvre dans un réseau de transport électrique ou dans un réseau de transport pour gaz.

9. Procédé selon l'une quelconque des revendications précédentes, **caractérisé par le fait que** l'horizon de prévision est supérieur à 2 heures (2h) et inférieur à 288 heures (288h).

10. Programme d'ordinateur, **caractérisé par le fait qu'**il est programmé pour être appliqué dans un procédé selon l'une quelconque des revendications précédentes.

11. Support de stockage, **caractérisé par le fait qu'**un programme d'ordinateur destiné à être appliqué dans un procédé selon les revendications 1 à 9 est stocké sur celui-ci.
